# EUROPEAN PATENT APPLICATION

(11) **EP 1 701 458 A2**
(43) Date of publication of application: **13.09.2006**
(21) Application number: 06251047.4
(22) Date of filing: 28.02.2006
(51) Int. Cl.: H04B 7/26

(54) **High-rate wireless communication method for packet data**

(30) Priority: 09.03.2005 US 659819 P; 30.11.2005 US 289984
(71) Applicant: LUCENT TECHNOLOGIES INC., Murray Hill, New Jersey 07974-0636 (US)
(72) Inventor: Pantelis, Monogioudis, Randolph, NJ 07869 (US)
(74) Representative: Sarup, David Alexander

(57) **Abstract**

A hybrid approach is provided to the formatting of signals for transmission in a high-data-rate wireless system. We retain the format and timing of an HRPD frame, but the data portions of selected slots within the frame are given over to OFDMA transmission instead of CDMA transmission. Because OFDMA is robust against self-interference, high throughput can be achieved in a greater number of slots, including at least some in which a low signal-to-interference-noise ratio (SINR) might limit a pure CDMA data rate.

## Description

### Cross-Reference To Related Application

This invention claims priority of Provisional Application Serial No. 60/659,819 which was filed on March 9, 2005.

### Field of the Invention

This invention relates to methods of formatting packet data for transmission in wireless networks.

### Art Background

There is growing interest in the high-rate transmission of packet data in wireless networks. The known methods include some, such as HRPD, that are based on a CDMA signal. Although useful in this regard, CDMA as currently practiced suffers certain limitations. For example, in severe multipath environments, self-interference tends to limit the throughput achievable on the CDMA forward link. In order to achieve the very high data rates demanded of emerging wireless systems, it is necessary to mitigate this limitation among others.

### Summary of the Invention

We have developed a hybrid approach to the formatting of signals for transmission. We retain the format and timing of an HRPD frame, but the data portions of selected slots within the frame are given over to OFDMA transmission instead of CDMA transmission. Because OFDMA is robust against self-interference, high throughput can be achieved in a greater number of slots, including at least some in which a low signal-to-interference-noise ratio (SINR) might limit a pure CDMA data rate.

In specific implementations, the time-multiplexed common pilot channel of a CDMA slot is used to compute a SINR value at the receiver. Pilot self-interference cancellation (PSIC) will often drive the computed SINR to higher values. These higher SINR values will in certain cases cause the receiver to return to the transmitter an extended dynamic rate control (E-DRC) signal indicating that a data rate exceeding the CDMA interference ceiling is acceptable. The transmitter may respond by transmitting in an OFDMA slot instead of a CDMA slot.

In specific implementations, our hybrid format is used for transmissions from the base station to individual users on the forward link of a wireless system.

### Brief Description of the Drawing

FIG. 1 is a schematic representation of a forward-link communication in an illustrative wireless communication system.
FIG. 2 is a schematic representation of a typical CDMA slot.
FIG. 3 is a schematic representation of an OFDMA slot according to the present invention in an illustrative embodiment.
FIG. 4 is a resource matrix that illustrates how bandwidth is utilized in a transmission frame by the CDMA and OFDMA slots according to the present invention in an illustrative embodiment.
FIG. 5 is a detail of the frame of FIG. 4.
FIG. 6 is a graph of DRC versus time in a hypothetical scenario. The graph includes a curve 130 that reflects short-term variations in DRC, and a curve 140 that has a longer time constant and therefore reflects only time-averaged variations in DRC.

### Detailed Description

In the following, we will describe an exemplary embodiment, in which a combination of CDMA and OFDMA formats is used in the forward link from the base station to the user terminals. Although the present invention is likely to find its most immediate applications in the forward link, its possible applications are not limited to the forward link, and applications to, e.g., the reverse link are also considered to lie within its scope.

We will use the term "access network (AN)" to collectively denote the base stations and the RNC, and the term "access terminal (AT)" to denote an individual user terminal or the like.

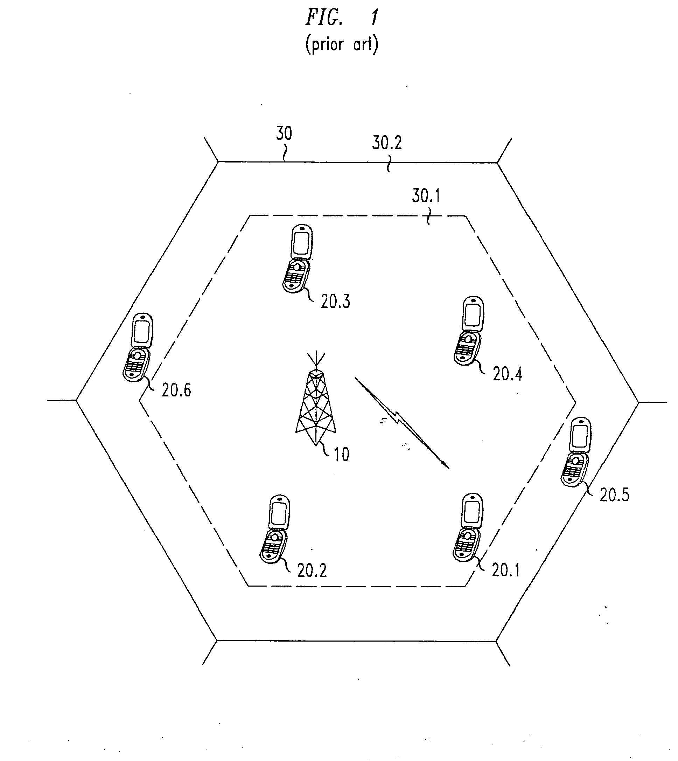

FIG. 1 shows, in schematic fashion, a forward-link communication from AN 10 to AT 20.1, which is one among a plurality of access terminals 20.1, 20.2, etc. It will be seen in the figure that cell 30 is divided into inner portion 30.1 and outer portion 30.2. It will be understood that in general, but also subject to specific channel conditions, traffic conditions, the presence of objects, and other environmental features, forward transmissions to those access terminals situated in inner portion 30.1 will be more susceptible to self-interference, whereas those directed to access terminals situated in outer portion 30.2 will be more susceptible to other-cell interference. The boundary between regions 30.1 and 30.2 is not strictly defined and is included solely for illustrative purposes.

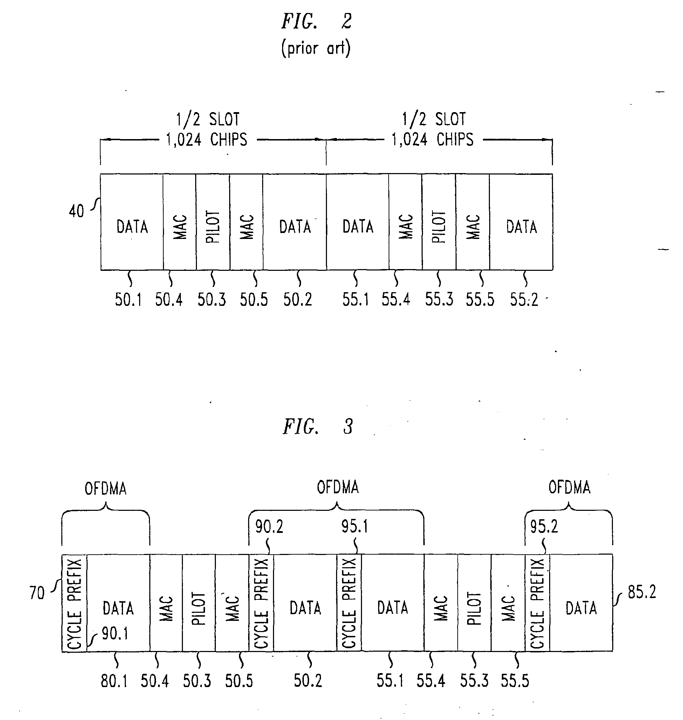

FIG. 2 shows, in schematic fashion, a typical CDMA slot 40, divided into data fields 50.1, 50.2, 55.1, and 55.2, pilot fields 50.3 and 55.3, and MAC fields 50.4, 50.5, 55.4, and 55.5. When modulated with an appropriate spreading code according to well-known CDMA modulation techniques, each field is further subdivided into chips (not shown). The CDMA transmissions can be time-multiplexed such that multiple ATs are served within one slot.

FIG. 3 shows, in schematic fashion, an OFDMA slot 70 according to the present invention in an illustrative embodiment. It will be seen that the OFDMA slot has essentially the same format as the CDMA slot. Corresponding fields that function in essentially the same way in the slots of FIGS. 2 and 3 bear like reference numerals. The principal modifications in going from slot 40 to slot 70 are in the data fields 80.1, 80.2, 85.1, and 85.2 of slot 70. It will be seen that each of the data fields includes one of cyclic prefixes 90.1, 90.2, 95.1, 95.2. As is well known to those skilled in OFDMA methods, the cyclic prefix is important to the process whereby the transmitted data symbol is recovered at the OFDMA receiver. As is also well known, the length of the cyclic prefix is advantageously varied in accordance with the delay spread associated with signal propagation. By permitting the length of the cyclic prefix to vary, the OFDMA transmissions can in at least some cases be made very robust against self interference in severe multipath environments.

As seen in FIG. 3, pilot field 50.3 and 55.3 of the CDMA slot are carried over as pilot fields 80.3 and 85.3 of the OFDMA slot. Significantly, the use of a common pilot in each channel may obviate the need to intersperse pilot subcarriers in the data field of the OFDMA slot. Instead, the OFDMA receiver can receive channel estimates from a channel estimator that works with the common pilot channel, and use those estimates for frequency equalization.

It will be seen in FIG. 3 that slot 70 retains MAC fields 50.4, 50.5, 55.4, and 55.5 of CDMA slot 40. Alternatively, the MAC fields can be omitted from slot 70 and those bit portions corresponding to the respective adjacent MAC fields can instead be included in data fields 80.1, 80.2, 85.1, and 85.2.

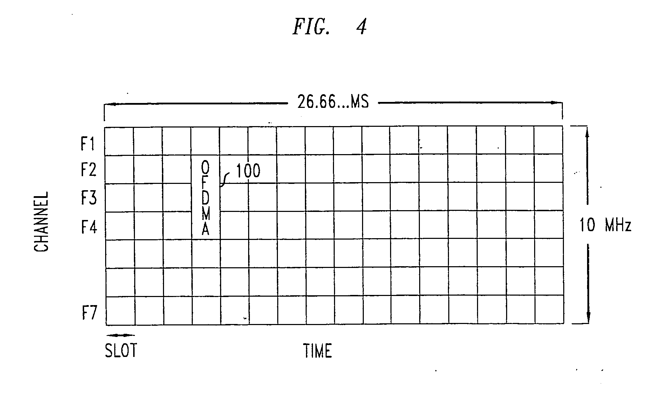

FIG. 4 is a resource matrix that conveniently illustrates how bandwidth is utilized by the CDMA and OFDMA slots according to our hybrid scheme. The figure illustrates one frame. The horizontal axis represents time. Along the time axis, the frame is divided into sixteen slots of, for example, total duration 26.67 ms as in conventional HRPD implementations. The vertical axis represents frequency. For purposes of illustration, but not by way of limitation, the frequency axis is divided into, e.g., seven RF channels, labeled F1, F2, ... , F7. The width of each channel is, for example, 1.25 MHz as in conventional HRPD implementations.

Within each RF channel F1, F2, etc., CDMA transmissions are time-multiplexed. However, concurrent CDMA transmissions may be made in different channels to the same user or to different users.

The OFDMA slots are time-multiplexed with the CDMA slots and have the same timing as the CDMA slots. Thus, for example, OFDMA slot 100, as seen in the figure, may be coincident in time with CDMA slots transmitted in other RF channels. An OFDMA slot may occupy as few as one RF, channel, but will more typically span several such channels. The OFDMA transmissions do not need to use the pulse shape filter typically used in HRPD specifications.

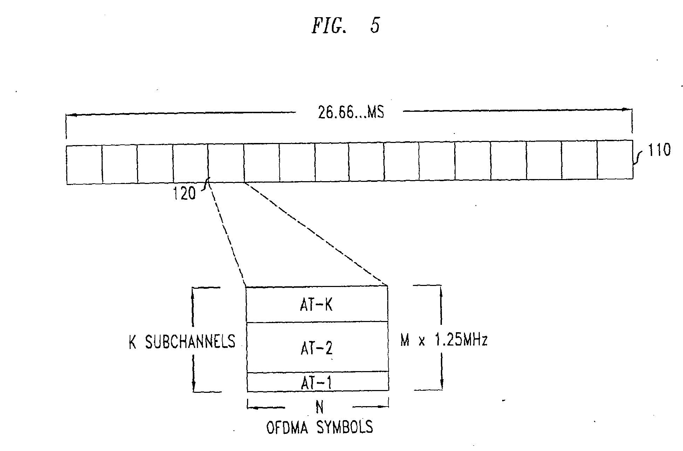

An OFDMA slot will now be described in more detail with reference to FIG. 5. Shown in the figure is section 110 of the frame of FIG. 4. The section shown has the full frame length along the time axis, but is M channels deep along the frequency axis. M is the number of RF channels spanned by OFDMA slot 120.

As indicated in the figure, slot 120 is divided into K subchannels. N OFDMAA symbols are encoded within the K subchannels. N and K are variables of the access network.

Optionally, one or more subchannels can be allocated to a single-user transmission. In such a case, users with significantly different spectral efficiencies can share a slot if they are placed on different RF channels or groups of RF channels.

Optionally, the bandwidth of all K subchannels can be used to time-multiplex more than one user. In such a case, users of similar spectral efficiency can share a slot using multi-user packets according to known HRPD techniques.

As well known to those familiar with the methods of OFDMA, the access network can configure certain characteristics of the OFDMA symbol format, such as the FFT size and the duration of the cyclic prefix. The FFT size determines the number of subcarriers, and typically ranges, by successive powers of 2, from 128 to 1024. The cyclic prefix typically ranges in duration, by successive powers of 2, from one-sixteenth to one-fourth the FFT size. These characteristics are advantageously selected for best performance in view of, e.g., the Doppler spread and delay spread offered by the operating environment. It should be noted that the DFT is available as an alternative to the FFT and is not necessarily limited to lengths related by successive powers of 2.

As is well known to those familiar with CDMA methods, the access network sets the data rate for each CDMA transmission according to the DRC report for each channel received from the access terminal, and typically also according to scheduling requirements as implemented in the forward-link scheduler.

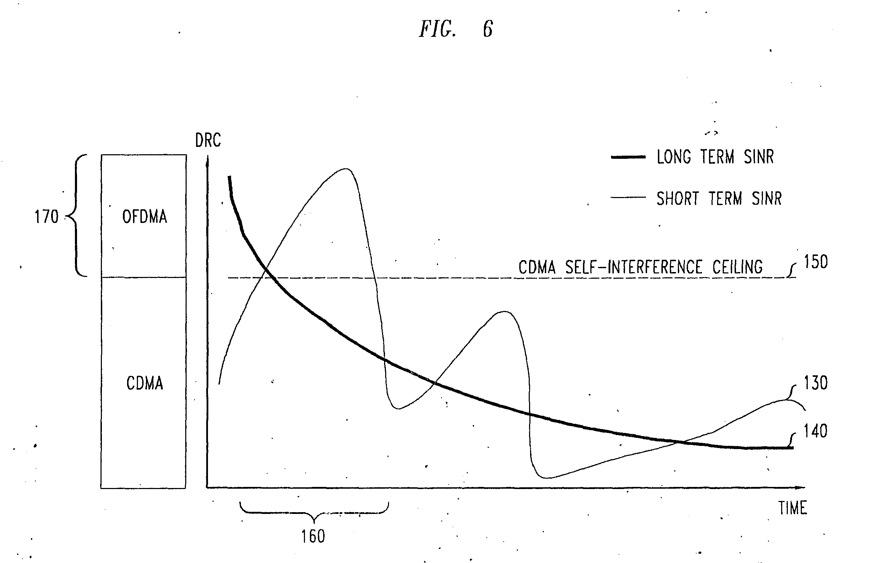

The DRC depends upon the SINR measured by the access terminal from the received pilot signals. The SINR, in turn, depends upon various fluctuating factors, including the quality of the channel, the received signal power, and the amount of interference. For purposes of illustration, FIG. 6 shows a graph of DRC versus time in a hypothetical scenario. Curve 130 reflects short-term variations in DRC, whereas curve 140 has a longer time constant and therefore reflects only time-averaged variations.

As is well known to those familiar with CDMA methods, a typical CDMA receiver, such as an MMSE CDMA receiver, will exhibit a ceiling on the SINR at each output, limiting the DRC reported to the access network when severe multipath interference limits the SINR. The ceiling is typically based on long-term estimates of the DRC, as represented, for example, by curve 140 of the figure. As a consequence, there may be periods of time in which higher data rates are feasible, but are prohibited because of the ceiling. Such a period is represented, for example, by interval 160 in the figure. Moreover, because OFDMA transmission is more robust against self-interference than CDMA transmission, further gains in throughput can be achieved by substituting OFDMA slots for CDMA slots during conditions of high self-interference.

In typical high-data-rate systems using CDMA, the time-multiplexed pilot channel will be transmitted from the base station at full power. Access terminals situated relatively near the cell site will therefore tend to experience relatively high self-interference and as a consequence to have relatively severe limits placed on their CDMA data rates.

Under such conditions, it is advantageous to transmit in OFDMA slots, as mentioned above. The data rate for such OFDMA transmissions is determined by a rate indicator alternative to the DRC, which has the possibility of being higher than the DRC, particularly under conditions of high self-interference. We refer to such an indicator as "extended DRC (E-DRC)."

Roughly speaking, the E-DRC for each channel is based on a SINR measurement on a received pilot signal from which the self-interference effects have been cancelled by processing within the access terminal. Such a process is referred to as "pilot self-interference cancellation (PSIC)." Algorithms for PSIC are known, and are described, for example, in K. Higuchi et al., "Multipath interference canceller for high-speed packet transmission with adaptive modulation and coding scheme in W-CDMA forward link," IEEE Journal on Selected Areas in Communications 20 (Feb. 2002), 419-432.

E-DRC extends the dynamic range of the DRC beyond what is supported by the DRC field in current HRPD implementations. In practice, E-DRC data may be time-multiplexed with DRC data transmitted on the reverse link.

In a multipath environment, the PSIC processing cancels the interfering paths from the path of interest and as a consequence, outputs a SINR measurement that in some environments may exceed the top SINR as measured by an MMSE CDMA receiver by as much as 10 dB or even more. Thus, for example, in the portion of FIG. 6 marked by interval 170, the E-DRC transmitted by the access terminal will be recognized by the base station as a candidate data rate for transmission in the OFDMA format. The data rate for the OFDMA slot will typically be greater than would be offered to a CDMA slot, although as noted above, it might be limited by the scheduler in view of competing traffic demands. It should be noted that even when E-DRC is received, the access network might choose to respond to DRC data instead, and transmit a CDMA slot. Provided the cyclic prefix is long enough to account for the multipath effects, and within system limitations, the SINR ceiling for the OFDMA data rate can in principle be set much higher than ceiling 150.

As noted, the access network may respond to an E-DRC message by transmitting in OFDMA format. The decision to make such a response will typically lie with the forward-link scheduler at the base station, which will also determine the data rate. The final data rate selection may be affected by current traffic conditions and fairness criteria and may be less than what is suggested by the E-DRC if significant resource sharing is needed. Thus, in particular, the forward link scheduler may respond with either a data rate that belongs in the E-DRC region using the OFDMA format or a data rate that belongs to the DRC region using the CDMA or OFDMA format.

The access network uses, e.g., the conventional forward traffic channel protocol for CDMA to indicate the selected transmission format to the access terminal. For this purpose, the pertinent header may need to be expanded to hold additional bits.

Referring back to FIG. 1, it will now be appreciated that those ATs lying in inner region 30.1 will generally, and on average, benefit most from OFDMA transmissions because they lie closest to the cell site. By contrast, CDMA transmissions are generally, and on average, most beneficial for the ATs lying in outer region 30.2, because CDMA is particularly effective for averaging other-cell interference as well as for performing soft handover.

As noted, the principles described above are also applicable to reverse-link transmissions. In the reverse link, the OFDMA transmissions may occupy RF channels orthogonal to those used for the CDMA frames, or they may share RF channels with CDMA frames. If those users transmitting in OFDMA format are subject to the same power control process as those users transmitting in CDMA format, the interference between OFDMA and CDMA users will not be a severe obstacle, in general. The OFDMA symbol format on the reverse link resembles that on the forward link except that pilot subcarriers are introduced in each subchannel for use by the base station receiver in making channel estimates.

## Claims

1. A method of transmitting data to a receiver over an air interface, wherein each transmission takes the form of one or more frames subdivided into slots, and the method comprises:
in at least one frame, designating each slot thereof as CDMA or OFDMA;
mapping data in CDMA format into each CDMA-designated slot (40);
mapping data in OFDMA format into each OFDMA-designated slot (70); and
transmitting at least one said frame containing both CDMA-formatted and OFDMA-formatted data.

2. The method of claim 1, wherein the receiver is a user terminal of a wireless communication network.

3. The method of claim 1, wherein the receiver is a base station of a wireless communication network.

4. The method of claim 1, further comprising obtaining at least one indication of an acceptable data rate, and wherein the designation of the slot as CDMA or OFDMA is made in response to said indication.

5. The method of claim 1, wherein at least one designation of a slot as OFDMA is made in response to receipt of an E-DRC signal.

6. The method of claim 5, wherein the mapping of data in OFDMA format includes specifying a transmission data rate in response to the E-DRC signal.

7. The method of claim 1, further comprising:
in each slot, obtaining an indication of an acceptable data rate for transmission in each of a plurality of frequency channels; and
in at least one OFDMA slot, designating two or more frequency channels for concurrent transmission of data to the receiver, wherein a respective data rate is assigned to each designated frequency channel in response to said indications.

8. The method of claim 1, CDMA slots are time-multiplexed with OFDMA slots using at least one common frequency channel.

9. The method of claim 1, wherein CDMA slots are frequency-multiplexed with concurrent OFDMA slots.

10. A method of transmitting data to a receiver over an air interface, comprising:
obtaining an indication of acceptable data rate for transmission in a given timeslot over each of a plurality of frequency channels;
in response to said indication, selecting two or more said channels and selecting a respective data rate for each selected channel;
mapping data into OFDM format for concurrent transmission in the selected channels at the selected data rates; and
transmitting the OFDM-formatted data in the given timeslot.
